# EUROPEAN PATENT APPLICATION

(11) **EP 4 645 610 A1**
(43) Date of publication of application: **05.11.2025**
(21) Application number: 23910874.9
(22) Date of filing: 28.12.2023
(51) Int. Cl.: H01R 31/06, H02J 7/00, H01R 24/00, H01R 13/502

(54) **VEHICLE-END DISCHARGE ADAPTER**

(30) Priority: 29.12.2022 CN 202211706766
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2023/142964
(87) International publication number: WO 2024/140960

(57) **Abstract**

Disclosed by the present disclosure is a vehicle discharge adapter, including a vehicle-end electrical connector, which includes a base and a male terminal assembly disposed in the base, and the male terminal assembly is configured to be electrically connected with a vehicle-end power supply device, and a mating cavity is formed at an end of the vehicle-end electrical connector; and a socket assembly, which is provided in the mating cavity, and the socket assembly includes a female terminal assembly, and the female terminal assembly is plugged with the male terminal assembly to form an electrical connection. Therefore, an external electrical load can be directly electrically connected to the vehicle discharge adapter, thereby realizing a vehicle-to-load discharging process.

## Description

### RELATED APPLICATION

The present disclosure claims priority to Chinese Patent Application NO. 202211706766.2, filed on December 29, 2022, which is hereby incorporated by reference its entirety.

### TECHNICAL FIELD

The present disclosure relates to the field of electrical connectors, and particularly to a vehicle discharge adapter.

### BACKGROUND

Electrical appliances in the market usually need to be connected to the power grid for power supply. In the event of emergencies of the power grid such as power shortage or power outage, these electrical appliances will immediately become inoperable.

As movable distributed energy storage devices, electric vehicles can store a considerable amount of electrical energy due to their huge quantity. Therefore, it is a problem that needs to be solved at present to effectively utilize the electrical energy in the electric vehicles in an idle state to achieve vehicle-to-load (V2L) discharge.

Moreover, at present, there is no portable, compact in size, and easy-to-operate adapter device designed in the market to achieve V2L discharge.

### SUMMARY

The present disclosure aims to provide a vehicle discharge adapter which is portable, compact in size, and easy to operate, so as to conveniently achieve V2L discharge.

The present disclosure provides a vehicle discharge adapter, including:
a vehicle-end electrical connector, which includes a base and a male terminal assembly disposed in the base, and the male terminal assembly is configured to be electrically connected with a vehicle-end power supply device, and a mating cavity is formed at an end of the vehicle-end electrical connector; and
a socket assembly, which is provided in the mating cavity, and the socket assembly includes a female terminal assembly, and the female terminal assembly is plugged with the male terminal assembly to form an electrical connection.

Optionally, the vehicle-end discharge adapter further includes a circuit board integrated with a discharge control module and a communication module, and the discharge control module performs bidirectional data and signal communication with a vehicle end through the communication module, and generates a signal matched with the vehicle discharge adapter.

Optionally, the discharge control module is integrated with a discharge pilot module, and the discharge pilot module is configured to generate a pilot signal matched with an external electrical load according to a control signal output from the discharge control module, and feed the pilot signal back to the discharge pilot module.

Optionally, the male terminal assembly includes a plurality of male terminals, each male terminal including a male contact section, a male limiting section and a male connection section which are provided in sequence, and the male contact section is configured to be electrically connected with the vehicle-end power supply device, the male connection section is configured to be electrically connected with a cable, and the male contact section, the male limiting section and the male connection section are integrally stamped-formed.

Optionally, the male contact section is formed as a first cylindrical body, the male connection section is formed as a second cylindrical body, a maximum diameter of the second cylindrical body is greater than that of the first cylindrical body, and a step is formed at a junction between the first cylindrical body and the second cylindrical body.

Optionally, the male limiting section includes at least two annular ribs, which protrude radially from an outer surface of the first cylindrical body, and the annular ribs are provided at intervals along an axial direction of the first cylindrical body.

Optionally, a sealing ring is disposed between the adjacent annular ribs.

Optionally, the vehicle-end electrical connector includes a housing which forms the mating cavity, one of the housing and the base is provided with a first snap-fit structure, and the other thereof is provided with a second snap-fit structure matched with the first snap-fit structure.

Optionally, the female terminal assembly includes a busbar frame, and a plurality of female terminals which are formed as a single unit via the busbar frame.

Optionally, the plurality of female terminals include charging terminals and signal terminals.

Optionally, one end of the female terminal is provided with a socket body, the other end thereof is connected to the busbar frame, and the socket body is electrically connected to the male terminal assembly by plugging.

Optionally, an end of the busbar frame opposite to the female terminal is configured to engage with a plug terminal of a two-phase and/or three-phase plug.

Optionally, the socket assembly further includes a terminal bracket, which is provided with a mounting slot, and the busbar frame is retained in the mounting slot, so that the plurality of female terminals are located on a first side of the terminal bracket facing the vehicle-end electrical connector, and the end of the busbar frame opposite to the plurality of female terminals is located on a second side of the terminal bracket opposite to the first side.

Optionally, the first side protrudes with limiting posts corresponding to each of the female terminals.

Optionally, the socket assembly further includes a first frame body, the second side protrudes with a plurality of retaining ribs, and after being assembled with the terminal bracket, the busbar frame is mounted to the first frame body via the retaining ribs.

Optionally, the socket assembly further includes a second frame body and a socket cover, and the second frame body is mounted to the first frame body to form an integrated component.

Optionally, the second frame body is provided with a plurality of mounting through-holes, the socket cover is provided with positioning posts corresponding to the mounting through-holes one by one, and the socket assembly is integrated by fasteners, which pass through the mounting through-holes to be in threaded connection with the positioning posts.

Optionally, an accommodation cavity is provided between the first frame body and the socket cover, a first protective member and a second protective member distributed in a vertical direction are provided in the accommodation cavity, and the first protective member and the second protective member are supported and connected by a first elastic member.

Optionally, an edge of the first frame body forming the accommodation cavity is provided with paired notches and a guide slot communicated with the notches, and both ends of the first protective member and the second protective member pass through the paired notches and are movable in the guide slot.

Optionally, both ends of the first protective member and the second protective member undergo an elastic deformation when passing through the paired notches, and regain their original shape after completely passing through the notches.

Optionally, in a process where a plug end acts on the first protective member and/or the second protective member, the first elastic member is compressed, the first protective member and/or the second protective member vertically move in the accommodation cavity to expose the busbar frame, and a plug terminal of the plug end is electrically connected to the busbar frame.

Optionally, the socket assembly further includes a transmission member, a microswitch and an indicator lamp; the microswitch and the indicator lamp are electrically connected to the female terminal assembly, respectively; and in a process where a plug end is inserted into the socket assembly, the vertical movement of the first protective member and/or the second protective member drives the transmission member to actuate the microswitch, thereby illuminating the indicator lamp.

Optionally, the transmission member is at least partially accommodated in the accommodation cavity, and the microswitch is provided at a rear end of the accommodation cavity away from the plug end.

Optionally, the rear end of the accommodation cavity is provided with a base plate having an opening where the transmission member is mounted, the opening is communicated with a limiting frame of the first frame body located at a rear side of the base plate, the transmission member and the limiting frame are supported and connected by a second elastic member, and the transmission member compresses the second elastic member to actuate the microswitch.

Optionally, the microswitch is electrically connected to a signal terminal in the female terminal assembly; and the indicator lamp is electrically connected to an L-terminal and an N-terminal in the female terminal assembly, respectively.

Optionally, cylindrical bodies of the L-terminal and the N-terminal are provided with an insertion gap, respectively, a control wire of the indicator lamp is inserted into the insertion gap of the L-terminal, and a neutral wire of the indicator lamp is inserted into the insertion gap of the N-terminal.

A vehicle discharge adapter according to the present disclosure at least achieves the following advantageous effects.
1. The vehicle discharge adapter constituted by the technical solution of the present disclosure is portable, compact in size, and easy to operate, and a female terminal assembly and a male terminal assembly are plugged to form an electrical connection, which can conveniently realize V2L discharging.
2. The female terminal assembly includes a busbar frame, and a plurality of female terminals which are formed as a unit via the busbar frame; an end of the busbar frame opposite to the female terminal is configured to engage with a plug terminal of a two-phase and/or three-phase plug. Therefore, this integrated arrangement not only facilitates the electrical connection between the external electrical load and the plug terminal of the plug, but also facilitates the electrical connection between the socket assembly and the vehicle electrical connector (i.e., the discharge vehicle plug).
3. An accommodation cavity is provided between the first frame body and the socket cover, a first protective member and a second protective member distributed in a vertical direction are provided in the accommodation cavity, and the first protective member and the second protective member are supported and connected by a first elastic member. Therefore, when the plug end is not connected to the external electrical load, the part of the plug terminal for mating the load in the busbar frame is covered by the first protective member and the second protective member, so as to prevent an operator from getting an electric shock.
4. The socket assembly further includes a transmission member, a microswitch and an indicator lamp; the microswitch and the indicator lamp are electrically connected to the female terminal assembly, respectively; and in a process where the plug end is inserted into the socket assembly, the vertical movement of the first protective member and/or the second protective member drives the transmission member to actuate the microswitch, thereby illuminating the indicator lamp. Therefore, the operator can deteremine whether the external electrical load is plugged in place through the indicator lamp.
5. The male contact section, the male limiting section and the male connection section of the male terminal are integrally stamped-formed. Therefore, the terminal does not need integral machining, which not only saves the machining time, but also saves the material.
6. The circuit board is integrated with a discharge control module and a communication module, and the discharge control module performs bidirectional data and signal communication with a vehicle end through the communication module, and generates a signal matched with the vehicle discharge adapter, and the discharge control module is integrated with a discharge pilot module. Therefore, by providing the discharge pilot module, the pilot signal matched with the vehicle discharge adapter is generated according to the control signal output from the discharge control module, so as to realize a discharging process of the electric vehicle to the external load. In addition, the discharge control module, the discharge pilot module and the communication module are integrated on the circuit board, thereby simplifying the circuit design of the vehicle discharge adapter.

Other features and advantages of the present disclosure will become clear from the following detailed description of the embodiments of the present disclosure with reference to the drawings.

### BRIEF DESCRIPTION OF THE DRAWINGS

The drawings, which are incorporated in and constitute a part of the specification, illustrate embodiments of the present disclosure and together with the description, serve to explain the principles of the present disclosure.
FIG. 1 illustrates a perspective view of a vehicle discharge adapter according to an embodiment of the present disclosure;
FIG. 2 illustrates a perspective exploded view of a vehicle discharge adapter illustrated in FIG. 1;
FIG. 3 illustrates a schematic diagram of a male terminal assembly and a female terminal assembly in FIG. 2;
FIG. 4 illustrates an assembly diagram of a female terminal assembly, a first frame body, a second frame body and a socket cover in FIG. 2;
FIG. 5 illustrates an assembly diagram of a first frame body, a first protective member, a second protective member and a transmission member in FIG. 2;
FIG. 6 illustrates an assembly diagram of a terminal bracket, a female terminal assembly and an indicator lamp in FIG. 2; and
FIG. 7 illustrates an assembly diagram of a male terminal assembly and a female terminal assembly in FIG. 2.

### Reference numerals:

100-vehicle discharge adapter; 101-vehicle-end electrical connector; 102-base; 103-mating cavity; 104-housing; 105-first snap-fit structure; 106- busbar frame; 107-terminal bracket; 108-mounting slot; 109-first side; 110-second side; 111-limiting post; 112-first frame body; 113-retaining rib; 114-second frame body; 115-socket cover; 116-positioning post; 117-fastener; 118-mounting through-hole; 119-accomodation cavity; 120-first protective member; 121-second protective member; 122-first elastic member; 123-indicator lamp; 124-limiting frame; 125-second elastic member; 126-microswitch; 127-base plate; 128-notch; 129-guide slot; 300-female terminal; 301- socket body; 302-slot; 303-elastic arm; 304-cylindrical body; 305-guide portion; 306-guide hole; 307-arc-shaped rib; 308-guide inclined surface; 309-extended tail end; 400-male terminal; 401- male contact section; 403-male connection section; 404-annular rib; 405-male charging terminal; 406-male signal terminal; 407-first cylindrical body; 408-second cylindrical body; 409-sealing ring.

### DESCRIPTION OF THE EMBODIMENTS

Various exemplary embodiments of the present disclosure will now be described in detail with reference to the drawings. It should be noted that the relative arrangements, numerical expressions and values of parts and steps set forth in these embodiments do not limit the scope of the present disclosure unless otherwise specified.

The following description of at least one embodiment is merely illustrative and in no way intended to limit the present disclosure or the application or the use thereof.

Technologies, methods and devices known to those of ordinary skill in the related art may not be discussed in detail, but in appropriate cases, the above techniques, methods and devices should be regarded as a part of the specification.

In all examples illustrated and discussed here, any specific value should be interpreted as illustrative only and not as a limitation. Therefore, other examples of the embodiments may have different values.

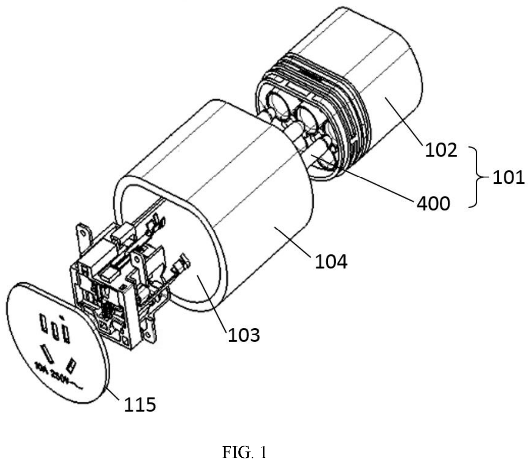

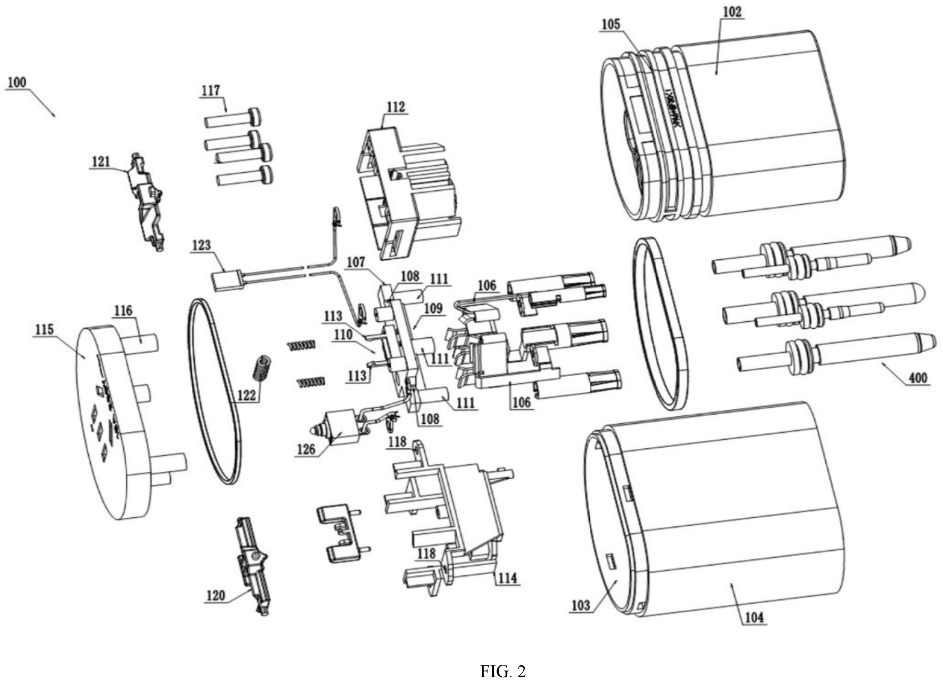

As illustrated in FIGS. 1 and 2, the present disclosure provides a vehicle discharge adapter 100, including:
a vehicle-end electrical connector 101, which includes a base 102 and a male terminal assembly disposed in the base 102, and the male terminal assembly is configured to be electrically connected with a vehicle-end power supply device, and a mating cavity 103 is formed at an end of the vehicle-end electrical connector 101; and
a socket assembly, which is provided in the mating cavity 103, and the socket assembly includes a female terminal assembly, and the female terminal assembly is plugged with the male terminal assembly to form an electrical connection.

To be noted, the vehicle-end electrical connector 101 can be understood as a discharge vehicle plug, which is configured to be electrically connected with a discharge vehicle socket and further electrically connected with an Alternating Current (AC) vehicle-mounted discharger. When the discharge vehicle plug is connected to the discharge vehicle socket, the connection confirmation of an AC V2L charging-discharging connection device and the judgment of rated current parameters are carried out through an AC V2L discharge control pilot circuit disclosed in GB/T (National Standard Recommended which is issued by the Standardization Administration of China) 18487.4-2021, so as to realize the process of discharging vehicle-end alternating current to an external electrical load connected to the socket assembly.

Therefore, the socket assembly is provided in the mating cavity 103, and the female terminal assembly and the male terminal assembly are directly plugged to form an electrical connection, which not only ensures the stable electrical connection between the terminals, but also saves the occupied space and is convenient for carriage.

Specifically, in some embodiments, the vehicle discharge adapter may further include a circuit board (not illustrated), which is integrated with a discharge control module and a communication module, and the discharge control module performs bidirectional data and signal communication with a vehicle end through the communication module, and generates a signal matched with the vehicle discharge adapter.

Optionally, the discharge control module may further be integrated with a discharge pilot module, which is configured to generate a pilot signal matched with an external electrical load according to a control signal output from the discharge control module, and feed the pilot signal back to the discharge pilot module.

Therefore, by providing the discharge pilot module, the pilot signal matched with the vehicle discharge adapter is generated according to the control signal output from the discharge control module, so as to realize a discharging process of the electric vehicle to the external load. In addition, the discharge control module, the discharge pilot module and the communication module are integrated on the circuit board, thereby simplifying the circuit design of the vehicle discharge adapter.

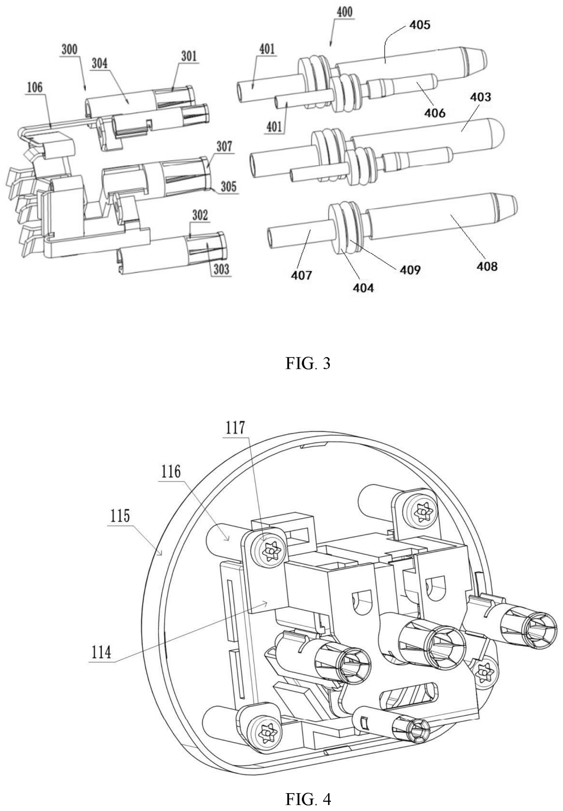

More specifically, as illustrated in FIG. 3, the male terminal assembly includes a plurality of male terminals, each male terminal including a male contact section 401, a male limiting section and a male connection section 403 which are provided in sequence, and the male contact section 401 is configured to be electrically connected with the vehicle-end power supply device, and the male connection section 403 is configured to be electrically connected with a cable. The male contact section 401, the male limiting section and the male connection section 403 may be integrally stamped-formed.

Therefore, the terminal does not need integral machining, which not only saves the machining time, but also saves the material.

With continued reference to FIG. 3, optionally, the male contact section 401 is formed as a first cylindrical body 407, the male connection section 403 is formed as a second cylindrical body 408, a maximum diameter of the second cylindrical body 408 is greater than that of the first cylindrical body 407, and a step is formed at a junction between the first cylindrical body 407 and the second cylindrical body 408.

More specifically, in some embodiments, the maximum diameter of the first cylindrical body 407 is 2.4 mm to 4.8 mm, and/or the maximum diameter of the second cylindrical body 408 is 3.4 mm to 6.2 mm.

The male terminal in the present disclosure may specifically include a male charging terminal 405 and a male signal terminal 406. Therefore, more specifically, it can be understood that in some embodiments, the maximum diameter of the first cylindrical body 407 of the male charging terminal 405 may be 3.6 mm to 4.8 mm. Optionally, in this embodiment, the maximum diameter of the first cylindrical body 407 of the male charging terminal 405 is 3.96 mm.

Similarly, in some embodiments, the maximum diameter of the second cylindrical body 408 of the male charging terminal 405 may be 4.8 mm to 6.2 mm. Optionally, in this embodiment, the maximum diameter of the second cylindrical body 408 of the male charging terminal 405 is 5.95 mm.

Similarly, in some embodiments, the maximum diameter of the first cylindrical body 407 of the male signal terminal 406 may be 2.4 mm to 3.4 mm. Optionally, in this embodiment, the maximum diameter of the first cylindrical body 407 of the male signal terminal 406 is 2.48 mm.

Similarly, in some embodiments, the maximum diameter of the second cylindrical body 408 of the male signal terminal 406 may be 3.4 mm to 4.2 mm. Optionally, in this embodiment, the maximum diameter of the second cylindrical body 408 of the male signal terminal 406 is 3.57 mm.

It can be understood that the sizes of the cylindrical bodies of the male charging terminal 405 and the male signal terminal 406 may be set according to actual needs (e.g., the size of the female terminal), and are not specifically limited in the present disclosure.

In some embodiments, the male limiting section includes at least two annular ribs 404, which protrude radially from an outer surface of the first cylindrical body 407, and the annular ribs 404 are provided at intervals along an axial direction of the first cylindrical body 407. Optionally, a sealing ring 409 is disposed between the adjacent annular ribs 404. Therefore, when the male terminal is positioned, the sealing performance can be ensured.

As illustrated in FIG. 1, the vehicle-end electrical connector 101 includes a housing 104 which forms the mating cavity 103, one of the housing 104 and the base 102 is provided with a first snap-fit structure 105, and the other thereof is provided with a second snap-fit structure (not illustrated) matched with the first snap-fit structure 105. Thus, the mounting between the housing 104 and the base 102 can be easily realized. It can be understood that the specific form of the snap-fit structure is not limited in the present disclosure, so long as a stable structural connection can be achieved.

Specifically, as illustrated in FIG. 3, the female terminal assembly includes a busbar frame 106, and a plurality of female terminals 300 which are formed as a single unit via the busbar frame 106. Therefore, the structural design of the terminals in the socket assembly can be optimized.

More specifically, the plurality of female terminals 300 include charging terminals, such as Protective Earth Terminals (PE-terminals), Line Terminals (L-terminals), Neutral Terminals (N-terminals), and signal terminals. The signal terminal may include a Connection Confirm (CC) signal terminal and a Control Pilot (CP) signal terminal.

The CC signal is a connection confirmation signal in vehicle charging. By detecting a voltage condition of CC the signal, the type of a gun can be determined, that is, it is judged whether the gun is a charging gun or a discharging gun, and whether the charging gun or the discharging gun has been plugged in. In addition, a gun head of CC signal terminal is provided with an RC resistor, which reflects the capacity of a gun cable. The thickness of the cable is varied with the RC resistor, so it is necessary to determine the maximum current that the cable can withstand at the same time.

In this embodiment, it can be understood that the CC signal is a connection confirmation signal between the external electrical load connected with the socket assembly and the vehicle end. Generally, a microswitch 126 may be provided to be connected to the CC signal terminal, and after the external electrical load is plugged into the socket, the microswitch 126 is actuated to transmit a plug-in signal to the vehicle end through the CC signal terminal and the corresponding male terminal 400.

The signal terminal may include a CP signal terminal. The CP signal stands for a control pilot function signal, which mainly monitors the interaction between an electric vehicle and an electric vehicle power supply device (charging pile, Electric Vehicle Supply Equipment (EVSE))/an external electrical device (load). Specifically, the CP signal is a handshake signal between the electric vehicle and the charging pile/the external load, which is a communication mode using PWM modulation and alternating amplitude.

As illustrated in FIG. 3, one end of the female terminal 300 is provided with a socket body 301, the other end thereof is connected to the busbar frame 106, and the socket body 301 is electrically connected to the male terminal assembly by plugging. An end of the busbar frame 106 opposite to the female terminal 300 is configured to engage with a plug terminal of a two-phase and/or three-phase plug. Therefore, either of a two-phase electrical load and a three-phase electrical load may be connected to the vehicle end using the discharge adapter.

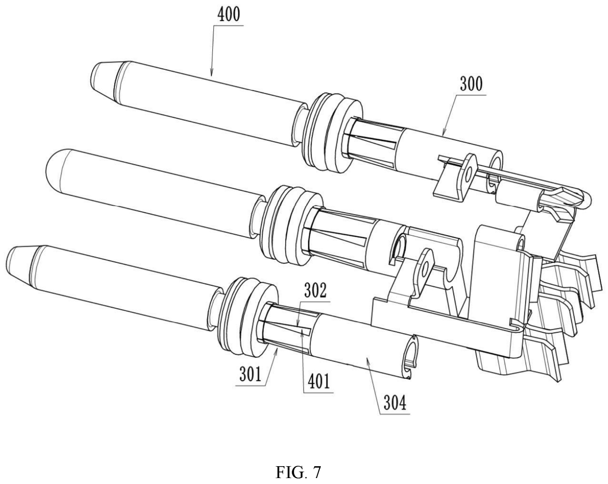

Specifically, the specific structure of the female terminal 300 is described with reference to FIGS. 3, 6 and 7.

A front end of the socket body 301 is divided into at least two elastic arms 303 by an axially extending slot 302, and tail ends of the elastic arms 303 (the ends facing the male terminal) circumferentially enclose a plug hole, into which the male contact section 401 is inserted. Therefore, the front end of the socket body 301 is composed of the elastic arms 303 distributed uniformly and circumferentially, and the elasticity of the elastic arms 303 ensures optimal adaptation to the insertion of the male terminal 400.

A rear end of the socket body 301 is a cylindrical body 304, and an inner diameter of the plug hole is smaller than a maximum radial diameter of the cylindrical body 304. As can be seen from FIG. 3, the cylindrical shape enclosed by the elastic arms 303 gradually tapers inward relative to the cylindrical body 304. That is, the elastic arm 303 gradually inclines inward along an axial direction (also may be understood as a withdrawal direction of the male terminal 400) from one end connected to the cylindrical body 304. This arrangement makes the inner diameter of the plug hole smaller than an inner diameter of the cylindrical body 304, and then certainly smaller than the maximum radial diameter of the cylindrical body 304. The maximum radial diameter of the cylindrical body 304 here may be understood as an outer diameter of the cylindrical body 304.

Therefore, when being inserted into the socket body 301, the male terminal 400 is subjected to a pressure exerted by an extended tail end 309 of the elastic arm 303, which is conducive to the tight fit between the male terminal 400 and the socket body 301.

Further, extending axially from the tail end of the elastic arm 303 is a guide portion 305, and a tail end of the guide portion 305 circumferentially encloses a guide hole 306, and an inner diameter of the guide hole 306 is greater than that of the plug hole. Therefore, the male terminal 400 can be smoothly guided to be inserted into the socket body 301.

Specifically, the guide portion 305 is configured as an arc-shaped rib 307 protruding radially outward relative to an outer peripheral surface of the elastic arm 303, and the arc-shaped rib 307 circumferentially encloses an annular rib, and a maximum radial diameter of the annular rib is less than or equal to that of the cylindrical body 304.

It can be understood that the guide portion 305 is a portion that expands radially outward with respect to the elastic arm 303. Therefore, the inner diameter of the guide hole 306 is greater than the diameter of the plug hole. Further, in some embodiments, the guide portion 305 may extend radially outward such that the maximum radial diameter of the annular rib is equal to that of the cylindrical body 304.

More specifically, an outer surface of the arc-shaped rib 307 is inclined radially outward at an angle of 2° to 3° with respect to an outer surface of the elastic arm 303, which can more advantageously guide the male terminal 400 to be inserted into the socket body 301.

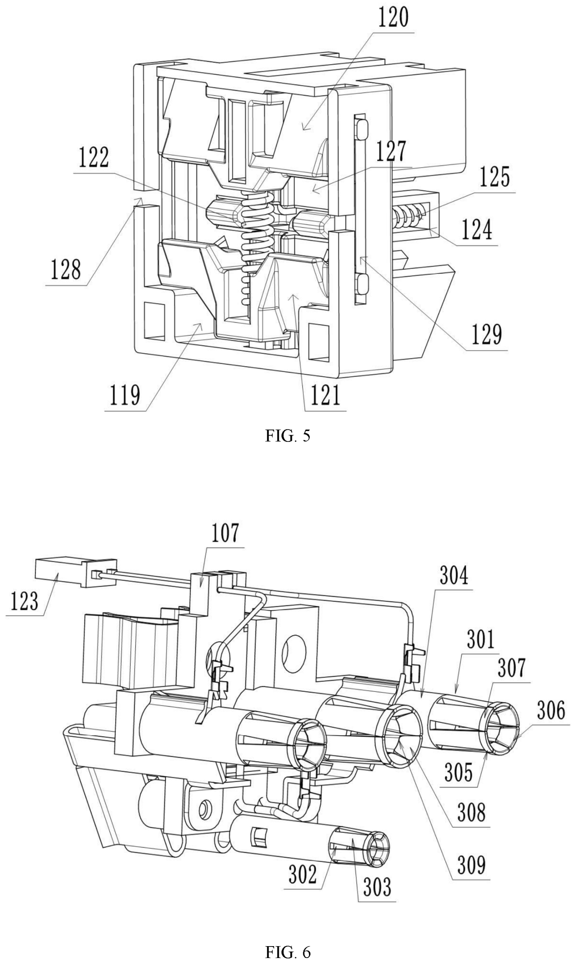

In some embodiments, the adjacent arc-shaped ribs 307 are at least partially in contact with each other. As illustrated in FIG. 6, tail ends of the adjacent arc-shaped ribs 307 (i.e., ends contacting the male terminal 400) are in contact with each other at the tips.

Moreover, in some embodiments, the elastic arm 303 is configured such that a circumferential width thereof gradually increases along the withdraw direction of the male terminal 400. Therefore, a shortest distance between the adjacent arc-shaped ribs 307 except the tips of the tail ends increases progressively along the withdraw direction of the male terminal 400. As seen in FIG. 6, a triangular space is formed between the adjacent elastic arms 303. Of course, the specific variation of the axial width of the elastic arms 303 is not limited in the present disclosure, and the space between the adjacent elastic arms 303 may be of any reasonable shape.

As illustrated in FIG. 6, an inner surface of the guide portion 305 may be provided with a guide inclined surface 308 extending obliquely along an insertion direction of the male terminal 400. Optionally, the guide inclined surface 308 is at an inclination angle of 21° to 24° with respect to the inner surface of the guide portion 305. The inclination angle may be set to 21°, 22°, 23°, 24°, etc., depending on the actual assembly tolerance. Therefore, the male terminal 400 may be inserted into the socket body 301 along the guide inclined surface 308.

Further, the extended tail end 309 of the guide inclined surface 308 is closer to the rear end of the socket body 301 than a junction between the guide portion 305 and the elastic arm 303. It can be understood that an extension length of the guide inclined surface 308 is greater than that of the arc-shaped rib 307. Specifically, the male contact section 401 may be in abutting contact with the extended tail end 309 of the guide inclined surface 308. Therefore, not only the smooth guidance of the male terminal 400 is ensured, but also the stable electrical connection between the male terminal 400 and the socket body 301 is ensured.

Referring back to FIG. 2, the socket assembly further includes a terminal bracket 107, which is provided with a mounting slot 108, and the busbar frame 106 is retained in the mounting slot 108, so that the plurality of female terminals 300 are located on a first side 109 of the terminal bracket 107 facing the vehicle-end electrical connector 101, and the end of the busbar frame 106 opposite to the plurality of female terminals 300 is located on a second side 110 of the terminal bracket 107 opposite to the first side 109.

Therefore, the female terminal 300 can be limited by the terminal bracket 107.

Specifically, the first side 109 protrudes with limiting posts 111 corresponding to each of the female terminals 300. Therefore, the female terminal 300, such as the PE-terminal, the L-terminal and the N-terminal, can be fixed by the limiting post 111.

Specifically, as illustrated in FIGS. 2 and 4, the socket assembly further includes a first frame body 112, the second side 110 protrudes with a plurality of retaining ribs 113, and after being assembled with the terminal bracket 107, the busbar frame 106 is mounted to the first frame body 112 via the retaining ribs 113. Further, as illustrated in FIGS. 2, 4 and 5, the socket assembly further includes a second frame body 114 and a socket cover 115, and the second frame body 114 is mounted to the first frame body 112 to form an integrated component.

As illustrated in FIGS. 2 and 4, the second frame body 114 is provided with a plurality of mounting through-holes 118, the socket cover 115 is provided with positioning posts 116 corresponding to the mounting through-holes 118 one by one, and the socket assembly is integrated by fasteners 117, which pass through the mounting through-holes 118 to be in threaded connection with the positioning posts 116.

Therefore, the integrated component, i.e., the socket assembly, directly mates with the male terminal assembly and is accommodated in the mating cavity 103.

As illustrated in FIGS. 2 and 5, an accommodation cavity 119 is provided between the first frame body 112 and the socket cover 115, a first protective member 120 and a second protective member 121 distributed in a vertical direction are provided in the accommodation cavity 119, and the first protective member 120 and the second protective member 121 are supported and connected by a first elastic member 122.

Specifically, an edge of the first frame body 112 forming the accommodation cavity 119 is provided with paired notches 128 and guide slot 129 communicated with the notches 128, and both ends of the first protective member 120 and the second protective member 121 pass through the paired notches 128 and are movable in the guide slot 129.

Specifically, both ends of the first protective member 120 and the second protective member 121 undergo an elastic deformation when passing through the paired notches 128, and regain their original shape after completely passing through the notches 128. It can be understood that the first protective member 120 and the second protective member 121 are assembled to the first frame body 112 by the notches 128, and movable up and down in the guide slot 129 at both sides. Finally, the first protective member 120 and the second protective member 121 are supported by the first elastic member 122 without moving.

More specifically, the first elastic member 122 may be a spring. Further, the first protective member 120 and the second protective member 121 may be provided with protrusions matched with the aperture of the spring, and the spring is disposed to sleeve and clamp the protrusions for limiting.

In some embodiments, in a process where a plug end acts on the first protective member 120 and/or the second protective member 121, the first elastic member 122 is compressed, the first protective member 120 and/or the second protective member 121 vertically move in the accommodation cavity to expose the busbar frame 106, and a plug terminal of the plug end is electrically connected to the busbar frame 106. Therefore, an electrical connection between the external electrical load and the vehicle discharge adapter 100 can be achieved.

In some embodiments, as illustrated in FIGS. 2 and 6, the socket assembly further includes a transmission member, a microswitch 126 and an indicator lamp 123; the microswitch 126 and the indicator lamp are electrically connected to the female terminal assembly, respectively; and in a process where the plug end is inserted into the socket assembly, the vertical movement of the first protective member 120 and/or the second protective member 121 drives the transmission member to actuate the microswitch 126, thereby illuminating the indicator lamp 123. Therefore, an operator can acquire whether the external electrical load is plugged in place through the indicator lamp 123.

As illustrated in FIGS. 2 and 5, the transmission member is at least partially accommodated in the accommodation cavity 119, and the microswitch 126 is provided at a rear end of the accommodation cavity 119 away from the plug end. Specifically, the rear end of the accommodation cavity 119 is provided with a base plate 127 having an opening where the transmission member is mounted, the opening is communicated with a limiting frame 124 of the first frame body 112 located at a rear side of the base plate 127, the transmission member and the limiting frame 124 are supported and connected by a second elastic member 125, and the transmission member compresses the second elastic member 125 to actuate the microswitch 126.

It can be understood that the microswitch 126 is electrically connected to a signal terminal in the female terminal assembly; and the indicator lamp 123 is electrically connected to an L-terminal and an N-terminal in the female terminal assembly, respectively.

Specifically, as illustrated in FIG. 6, the cylindrical bodies 304 of the L-terminal and the N-terminal are provided with an insertion gap, respectively, a control wire of the indicator lamp 123 is inserted into the insertion gap of the L-terminal, and a neutral wire of the indicator lamp is inserted into the insertion gap of the N-terminal.

Although some specific embodiments of the present disclosure have been described in detail by way of examples, those skilled in the art should understand that the above examples are only for illustration, rather than to limit the scope of the present disclosure. It should be understood by those skilled in the art that modifications can be made to the above embodiments without departing from the scope and the principle of the present disclosure. The scope of the present disclosure is defined by the appended claims.

## Claims

1. A vehicle discharge adapter, comprising:
a vehicle-end electrical connector, which comprises a base and a male terminal assembly disposed in the base, wherein the male terminal assembly is configured to be electrically connected with a vehicle-end power supply device, and a mating cavity is formed at an end of the vehicle-end electrical connector; and
a socket assembly, which is provided in the mating cavity, and the socket assembly comprises a female terminal assembly, wherein the female terminal assembly is plugged with the male terminal assembly to form an electrical connection.

2. The vehicle discharge adapter according to claim 1, further comprising a circuit board integrated with a discharge control module and a communication module, wherein the discharge control module performs bidirectional data and signal communication with a vehicle end through the communication module, and generates a signal matched with the vehicle discharge adapter.

3. The vehicle discharge adapter according to claim 2, wherein the discharge control module is integrated with a discharge pilot module, and the discharge pilot module is configured to generate a pilot signal matched with an external electrical load according to a control signal output from the discharge control module, and feed the pilot signal back to the discharge pilot module.

4. The vehicle discharge adapter according to claim 1, wherein the male terminal assembly comprises a plurality of male terminals, each male terminal comprising a male contact section, a male limiting section and a male connection section which are provided in sequence, wherein the male contact section is configured to be electrically connected with the vehicle-end power supply device, the male connection section is configured to be electrically connected with a cable, and the male contact section, the male limiting section and the male connection section are integrally stamped-formed.

5. The vehicle discharge adapter according to claim 4, wherein the male contact section is formed as a first cylindrical body, the male connection section is formed as a second cylindrical body, a maximum diameter of the second cylindrical body is greater than that of the first cylindrical body, and a step is formed at a junction between the first cylindrical body and the second cylindrical body.

6. The vehicle discharge adapter according to claim 5, wherein the male limiting section comprises at least two annular ribs, which protrude radially from an outer surface of the first cylindrical body, and the annular ribs are provided at intervals along an axial direction of the first cylindrical body.

7. The vehicle discharge adapter according to claim 6, wherein a sealing ring is disposed between the adjacent annular ribs.

8. The vehicle discharge adapter according to claim 1, wherein the vehicle-end electrical connector comprises a housing which forms the mating cavity, one of the housing and the base is provided with a first snap-fit structure, and the other thereof is provided with a second snap-fit structure matched with the first snap-fit structure.

9. The vehicle discharge adapter according to claim 1, wherein the female terminal assembly comprises a busbar frame, and a plurality of female terminals which are formed as a single unit via the busbar frame.

10. The vehicle discharge adapter according to claim 9, wherein the plurality of female terminals comprise charging terminals and signal terminals.

11. The vehicle discharge adapter according to claim 9, wherein one end of the female terminal is provided with a socket body, the other end thereof is connected to the busbar frame, and the socket body is electrically connected to the male terminal assembly by plugging.

12. The vehicle discharge adapter according to claim 11, wherein an end of the busbar frame opposite to the female terminal is configured to engage with a plug terminal of a two-phase and/or three-phase plug.

13. The vehicle discharge adapter according to claim 12, wherein the socket assembly further comprises a terminal bracket, which is provided with a mounting slot, and the busbar frame is retained in the mounting slot, so that the plurality of female terminals are located on a first side of the terminal bracket facing the vehicle-end electrical connector, and the end of the busbar frame opposite to the plurality of female terminals is located on a second side of the terminal bracket opposite to the first side.

14. The vehicle discharge adapter according to claim 13, wherein the first side protrudes with limiting posts corresponding to each of the female terminals.

15. The vehicle discharge adapter according to claim 13, wherein the socket assembly further comprises a first frame body, the second side protrudes with a plurality of retaining ribs, and after being assembled with the terminal bracket, the busbar frame is mounted to the first frame body via the retaining ribs.

16. The vehicle discharge adapter according to claim 15, wherein the socket assembly further comprises a second frame body and a socket cover, and the second frame body is mounted to the first frame body to form an integrated component.

17. The vehicle discharge adapter according to claim 16, wherein the second frame body is provided with a plurality of mounting through-holes, the socket cover is provided with positioning posts corresponding to the mounting through-holes one by one, and the socket assembly is integrated by fasteners, which pass through the mounting through-holes to be in threaded connection with the positioning posts.

18. The vehicle discharge adapter according to claim 16, wherein an accommodation cavity is provided between the first frame body and the socket cover, a first protective member and a second protective member distributed in a vertical direction are provided in the accommodation cavity, and the first protective member and the second protective member are supported and connected by a first elastic member.

19. The vehicle discharge adapter according to claim 18, wherein an edge of the first frame body forming the accommodation cavity is provided with paired notches and a guide slot communicated with the notches, and both ends of the first protective member and the second protective member pass through the paired notches and are movable in the guide slot.

20. The vehicle discharge adapter according to claim 19, wherein both ends of the first protective member and the second protective member undergo an elastic deformation when passing through the paired notches, and regain their original shape after completely passing through the notches.

21. The vehicle discharge adapter according to claim 18, wherein in a process where a plug end acts on the first protective member and/or the second protective member, the first elastic member is compressed, the first protective member and/or the second protective member vertically move in the accommodation cavity to expose the busbar frame, and a plug terminal of the plug end is electrically connected to the busbar frame.

22. The vehicle discharge adapter according to claim 18, wherein the socket assembly further comprises a transmission member, a microswitch and an indicator lamp; the microswitch and the indicator lamp are electrically connected to the female terminal assembly, respectively; and in a process where the plug end is inserted into the socket assembly, the vertical movement of the first protective member and/or the second protective member drives the transmission member to actuate the microswitch, thereby illuminating the indicator lamp.

23. The vehicle discharge adapter according to claim 22, wherein the transmission member is at least partially accommodated in the accommodation cavity, and the microswitch is provided at a rear end of the accommodation cavity away from the plug end.

24. The vehicle discharge adapter according to claim 23, wherein the rear end of the accommodation cavity is provided with a base plate having an opening where the transmission member is mounted, the opening is communicated with a limiting frame of the first frame body located at a rear side of the base plate, the transmission member and the limiting frame are supported and connected by a second elastic member, and the transmission member compresses the second elastic member to actuate the microswitch.

25. The vehicle discharge adapter according to claim 22, wherein the microswitch is electrically connected to a signal terminal in the female terminal assembly; and the indicator lamp is electrically connected to an L-terminal and an N-terminal in the female terminal assembly, respectively.

26. The vehicle discharge adapter according to claim 25, wherein cylindrical bodies of the L-terminal and the N-terminal are provided with an insertion gap, respectively, a control wire of the indicator lamp is inserted into the insertion gap of the L-terminal, and a neutral wire of the indicator lamp is inserted into the insertion gap of the N-terminal.
